# EUROPEAN PATENT SPECIFICATION

(11) **EP 2 637 243 B1**
(45) Date of publication and mention of the grant of the patent: **17.05.2017**
(21) Application number: 13158190.2
(22) Date of filing: 07.03.2013
(51) Int. Cl.: H01M 8/1016, H01M 8/124

(54) **Inorganic ion conductor, method of forming the same, and fuel cell including the inorganic ion conductor**
Anorganischer Ionenleiter, Herstellungsverfahren dafür und Brennstoffzelle mit dem anorganischen Ionenleiter
Conducteur ionique inorganique, son procédé de formation et pile à combustible comprenant le conducteur ionique inorganique

(30) Priority: 09.03.2012 KR 20120024452
(43) Date of publication of application: 11.09.2013
(73) Proprietor: Samsung Electronics Co., Ltd, Gyeonggi-do 443-742 (KR); National University Corporation Nagoya University, Nagoya-shi, Aichi 464-8601 (JP)
(72) Inventor: Heo, Pil-won, 449-712 Gyeonggi-do (KR); Kim, Ki-hyun, 449-712 Gyeonggi-do (KR); Hibino, Takashi, Nogoya-shi, Aichi 464-8601 (JP); Pak, Chan-ho, 449-712 Gyeonggi-do (KR); Choi, Kyoung-hwan, 449-712 Gyeonggi-do (KR)
(74) Representative: Zijlstra, Robert Wiebo Johan

(56) References cited:
- VERBAERE A ET AL: "New mixed-valence antimony phosphates: alpha- and beta-Sb<III>Sb<V>(P2O7)2", JOURNAL OF SOLID STATE CHEMISTRY, ORLANDO, FL, US, vol. 75, no. 2, 1 August 1988 (1988-08-01) , pages 217-224, XP024193833, ISSN: 0022-4596, DOI: 10.1016/0022-4596(88)90161-2 [retrieved on 1988-08-01]
- ABDERRAHIM AATIQA AND RACHID BAKRIA: "Crystal structures of newly synthesized SbV1.50FeIII0.50(PO4)3 and (SbV0.50FeIII0.50)P2O7", POWDER DIFFRACTION, JCPDS-INTERNATIONAL CENTRE FOR DIFFRACTION DATA, WSARTHMORE, US, vol. 22, no. 1, 1 March 2007 (2007-03-01), pages 47-54, XP009178894, ISSN: 0885-7156, DOI: 10.1154/1.2434788
- ABDERRAHIM AATIQ ET AL: "Preparation and crystal structure of SbV 1.50InIII0.50(PO4)3 and (SbV 0.50InIII0.50)P2O7", POWDER DIFFRACTION, JCPDS-INTERNATIONAL CENTRE FOR DIFFRACTION DATA, WSARTHMORE, US, vol. 23, no. 3, 1 September 2008 (2008-09-01), pages 232-240, XP009178902, ISSN: 0885-7156, DOI: 10.1154/1.2955583
- YANBAI SHEN ET AL: "Proton conduction in AIII0.5BV0.5P2O7 compounds at intermediate temperatures", JOURNAL OF MATERIALS CHEMISTRY, vol. 22, no. 30, 24 May 2012 (2012-05-24), page 14907, XP055127323, GB ISSN: 0959-9428, DOI: 10.1039/c2jm31887c

## Description

### BACKGROUND OF THE INVENTION

The present disclosure relates to an inorganic ion conductor, a method of forming the inorganic ion conductor, and a fuel cell including the inorganic ion conductor.

Fuel cells can be classified as a polymer electrolyte membrane fuel cell (PEMFC), a direct methanol fuel cell (DMFC), a phosphoric acid fuel cell (PAFC), a molten carbonate fuel cell (MCFC), or a solid oxide fuel cell (SOFC) depending on the type of electrolyte and the fuel used.

SOFCs can be suitable for use as a decentralized power supply, due to their high electrical efficiency and operability with a variety of fuels, including lower purity gaseous fuels. However, to provide for operation at high temperatures, SOFCs use more costly materials which are durable in high-temperature environments. Also, it is not easy to rapidly switch a SOFC on or off because of the heating or cooling time. Thus SOFCs are less suitable for portable power or vehicular power sources where rapid startup and shutdown are desirable. Therefore, research to provide a SOFC which can operate at a lower temperature is being actively conducted.

PEMFCs operating at 100°C or higher in non-humidified conditions, as compared to those operating at low temperatures, do not need a humidifier, and are known to be convenient in terms of control of water supply and highly reliable in terms of system operation. Furthermore, such PEMFCs may become more durable against carbon monoxide (CO) poisoning that may occur at fuel electrodes as they operate at high temperatures, and thus, a simplified reformer may be used therefor. These advantages mean that PEMFCs are increasingly drawing attention for use in such high-temperature, non-humidifying systems.

Along with the current trends of lowering the operation temperature of SOFCs and increasing the operation temperature of PEMPCs as described above, fuel cells operable in a moderate temperature range are drawing more attention.

A. Verbaere et al. in the Journal of Solid State Chemistry 75, 217-224 (1998) disclose mixed valency antimony phosphates of general formula α- and β-Sb^{III}Sb^{V}(P₂O₇)₂.

A. Aatiq et al. in Powder Diffraction 22 (1), March 2007, pages 47-53 disclose crystal structures of Sb^{V}_{1.50}Fe^{III}_{0.50}(PO₄)₃ and Sb^{V}_{0.50}Fe^{III}_{0.50}(P₂O₇).

A. Aatiq et al. in Powder Diffraction 23 (3), September 2008, pages 232-240 disclose crystal structures of Sb^{V}_{1.50}ln^{III}_{0.50}(PO₄)₃ and Sb^{V}_{0.50}ln^{III}_{0.50}(P₂O₇).

However, electrolyte membranes of fuel cells that have been developed so far do not exhibit satisfactory conductivity at moderate temperatures, and thus, there remains a need for an improved electrolyte material.

### SUMMARY OF THE INVENTION

Provided is an inorganic ion conductor having suitable conductivity, a method of forming the inorganic ion conductor, and a fuel cell including the inorganic ion conductor and having improved efficiency.

Additional aspects will be set forth in part in the description which follows and, in part, will be apparent from the description.

According to an aspect, an inorganic ion conductor including a trivalent metallic element, a pentavalent metallic element, phosphorus (P); and oxygen (O) is provided.

According to another aspect, an inorganic ion conductor represented by Formula 1 below is provided:

Formula 1 A_{0.5-x}Q_{0.5-y}P₂O₇,

wherein A is a trivalent metallic element, Q is a pentavalent metallic element, x is 0 to 0.45, and y is 0 to 0.45.

According to another aspect, a method of forming an inorganic ion conductor includes contacting a trivalent metal precursor, a pentavalent metal precursor, and a phosphoric acid precursor to obtain a mixture; and thermally treating the mixture to form the inorganic ion conductor, wherein the inorganic ion conductor includes the trivalent metallic element, the pentavalent metallic element, phosphorus (P), and oxygen (O).

According to another aspect, a method of forming an inorganic ion conductor includes contacting a trivalent metal precursor, a pentavalent metal precursor, and a phosphorous precursor to obtain a mixture; and thermally treating the mixture to obtain an inorganic ion conductor represented by Formula 1:

Formula 1 A_{0.5-x}Q_{0.5-y}P₂O₇,

wherein A is a trivalent metallic element, Q is a pentavalent metallic element, x is 0 to 0.45, and y is 0 to 0.45.

Also provided is an electrode for a fuel cell including the inorganic ion conductor disclosed above.

Also provided is a fuel cell including the inorganic ion conductor described above.

An electrolyte for a fuel cell includes the inorganic ion conductor described above.

A fuel cell including the inorganic ion conductor described above is provided.

An electrochemical device including the inorganic ion conductor described above is also provided.

### BRIEF DESCRIPTION OF THE DRAWINGS

These and/or other aspects will become apparent and more readily appreciated from the following description of the embodiments, taken in conjunction with the accompanying drawings in which:
FIG. 1 is a perspective exploded view of an embodiment of a fuel cell;
FIG. 2 is a cross-sectional diagram of an embodiment of a membrane-electrode assembly (MEA) of the fuel cell of FIG. 1;
FIG. 3 is a graph of log conductivity (S·cm⁻¹) versus temperature (°C) and inverse temperature (1000/K) which shows conductivities of the inorganic ion conductors of Examples 1, 8, and 14, and Comparative Example 1;
FIG. 4 is a graph of log conductivity (S·cm⁻¹) versus temperature (°C) and inverse temperature (1000/K) which shows conductivities of the inorganic ion conductors of Examples 14 to 16, 17, 21, and 22, and Comparative Example 1;
FIG. 5 is a graph of log conductivity (S·cm⁻¹) versus temperature (°C) and inverse temperature (1000/K) which shows conductivities of the inorganic ion conductors of Examples 1 to 3 and Comparative Example 1;
FIG. 6 is a graph of log conductivity (S·cm⁻¹) versus temperature (°C) and inverse temperature (1000/K) which shows conductivities of the inorganic ion conductors of Examples 8 to 10 and Comparative Example 1;
FIG. 7 is a graph of log conductivity (S·cm⁻¹) versus temperature (°C) and inverse temperature (1000/K) which shows conductivities of the inorganic ion conductors of Examples 1 and 23 to 26;
FIG. 8 is a graph of log conductivity (S·cm⁻¹) versus temperature (°C) and inverse temperature (1000/K) which shows conductivities of the inorganic ion conductors of Examples 8 and 31 to 33;
FIG. 9 is a graph of log conductivity (S·cm⁻¹) versus temperature (°C) and inverse temperature (1000/K) which shows conductivities of the inorganic ion conductors of Examples 14 and 39 to 42;
FIG. 10 is a graph of intensity (arbitrary units, a.u.) versus scattering angle (degrees 2θ) which shows results of an X-ray diffraction (XRD) analysis of each of the inorganic ion conductors of Examples 1, 8, and 14;
FIG. 11 is a graph of intensity (arbitrary units, a.u.) versus scattering angle (degrees 2θ) which shows an idealized calculated XRD pattern for SnP₂O₇;
FIG. 12 is a graph of cell voltage (volts) versus current density (milliamperes per square centimeter, mA·cm⁻²) which shows results of cell potential evaluation of cells including the inorganic ion conductor of Example 40;
FIG. 13 is a graph of cell voltage (volts) versus current density (milliamperes per square centimeter, mA·cm⁻²) which shows results of cell potential evaluation of cells including the inorganic ion conductor of Comparative Example 2;
FIG. 14 is a graph of cell voltage (volts) versus current density (milliamperes per square centimeter, mA·cm⁻²) which shows a result of cell potential and output density evaluation of cells including the inorganic ion conductor of Example 40;
FIG. 15A is a graph of intensity (arbitrary units, a.u.) versus scattering angle (degrees 2θ) which shows results of XRD analyses of the inorganic ion conductors of Examples 1 and 23 through 26;
FIG. 15B is a graph of intensity (arbitrary units) versus temperature (°C) which shows the results of a temperature programmed desorption (TOD) test of the inorganic ion conductors of Examples 8 and 33;
FIG. 16 is a graph of intensity (arbitrary units, a.u.) versus scattering angle (degrees 2θ) which shows the results of XRD analyses of the inorganic ion conductors of Examples 1 and 27 through 30;
FIG. 17 is a graph of intensity (arbitrary units, a.u.) versus scattering angle (degrees 2θ) which shows the results of XRD analyses of the inorganic ion conductors of Examples 8 and 31 through 33;
FIG. 18 is a graph of intensity (arbitrary units, a.u.) versus scattering angle (degrees 2θ) which shows the results of XRD analyses of inorganic ion conductors of Examples 8 and 35 through 37;
FIG. 19 is a graph of intensity (arbitrary units, a.u.) versus scattering angle (degrees 2θ) which shows the results of XRD analyses of the inorganic ion conductors of Examples 14 and 39 through 42;
FIG. 20 is a graph of intensity (arbitrary units, a.u.) versus scattering angle (degrees 2θ) which shows the results of XRD analyses of the inorganic ion conductors of Examples 14 and 43 through 46;
FIG. 21 is a graph electromotive force (EMF, millivolts, mV) versus temperature (°C) showing the characteristics of H₂ concentration cells using the inorganic ion conductors of Examples 24, 32 and 33;
FIG. 22 is a graph of intensity (arbitrary units) versus chemical shift (parts per million) which shows a ¹H-mass nuclear magnetic resonance (NMR) analysis spectrum of the inorganic ion conductor of Example 8; and
FIG. 23 is a graph of intensity (arbitrary units) versus chemical shift (parts per million) which shows a ¹H-mass NMR analysis spectrum of the inorganic ion conductor of Example 33.

### DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description.

It will be understood that when an element is referred to as being "on" another element, it can be directly on the other element or intervening elements may be present therebetween. In contrast, when an element is referred to as being "directly on" another element, there are no intervening elements present.

It will be understood that, although the terms "first," "second," "third" etc. may be used herein to describe various elements, components, regions, layers, and/or sections, these elements, components, regions, layers, and/or sections should not be limited by these terms. These terms are only used to distinguish one element, component, region, layer, or section from another element, component, region, layer, or section. Thus, "a first element," "component," "region," "layer," or "section" discussed below could be termed a second element, component, region, layer, or section without departing from the teachings herein.

The terminology used herein is for the purpose of describing particular embodiments only and is not intended to be limiting. As used herein, the singular forms "a," "an," and "the" are intended to include the plural forms, including "at least one," unless the content clearly indicates otherwise. "Or" means "and/or." As used herein, the term "and/or" includes any and all combinations of one or more of the associated listed items. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

According to an embodiment, an inorganic ion conductor including a trivalent metallic element, a pentavalent metallic element, phosphorus (P), and oxygen (O) is provided.

The trivalent metallic element is a metallic element having an oxidation number of 3, and it is at least one selected from aluminum (Al), iron (Fe), gallium (Ga), yttrium (Y), indium (In), antimony (Sb), bismuth (Bi), lanthanum (La), neodymium (Nd), and samarium (Sm). In and Fe are specifically mentioned. Also, the pentavalent metallic element is a metallic element having an oxidation number of 5, and it is at least one selected from antimony (Sb), niobium (Nb), bismuth (Bi), vanadium (V), and tantalum (Ta). Sb, Nb, and Ta are specifically mentioned.

The inorganic ion conductor including P and O may comprise at least one selected from an orthophosphate, and a pyrophosphate, and the like. Particularly, for the inorganic ion conductor, for example, a pyrophosphate including a trivalent metallic element and a pentavalent metallic element is specifically mentioned.

A pyrophosphate refers to a compound having an ion represented by Formula 2:

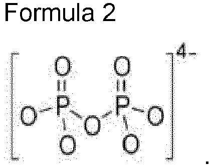

The inorganic ion conductor may have a cubic or pseudo-cubic crystal structure. Here, the term "pseudo-cubic" refers to a rhombohedral structure, which is similar to a cubic structure. The pseudo-cubic, e.g., rhombohedral structure, crystal structure may be confirmed by analyzing a distance between lattice planes of the crystal obtained in an X-ray diffraction analysis.

While not wanting to be bound by theory, it is understood that the inorganic ion conductor may have a structure in which metal oxide octahedra (e.g., a metal oxide octahedron of the formula MO₆) are located at each corner and at each center of the cubic faces of the structure to provide a face-centered cubic structure. Also, a phosphate group (e.g., a group of the formula P₂O₇) may be located at each of edges of the structure, and the phosphate groups may bind the metal oxide octahedra.

The crystal structure may be identical to or similar to, e.g., isostructural with, a crystalline phase of, for example, a compound of the formula MP₂O₇, wherein M refers to a tetravalent metallic element. M may be, for example, at least one selected from tin (Sn), zirconium (Zr), and titanium (Ti).

The inorganic ion conductor may be an inorganic ion conductor including a compound represented by Formula 1:

Formula 1 A₀.₅₋ₓQ₀._{5-y}P₂O₇.

In Formula 1, A is a trivalent metallic element, Q is a pentavalent metallic element, x is 0 to 0.45, and y is 0 to 0.45.

According to an embodiment, x is 0 to 0.2, and y is 0 to 0.2. In another embodiment, x is 0.1 to 0.4, and y is 0.1 to 0.4.

In Formula 1, the trivalent metallic element is at least one selected from aluminum (Al), iron (Fe), gallium (Ga), yttrium (Y), indium (In), antimony (Sb), bismuth (Bi), lanthanum (La), neodymium (Nd), and samarium (Sm). Also, the pentavalent metallic element is at least one selected from antimony (Sb), niobium (Nb), bismuth (Bi), vanadium (V), and tantalum (Ta).

The inorganic ion conductor may be synthesized in a form of, for example, A^{III}_{0.5}-ₓB^{V}_{0.5}P₂O₇ or A^{III}_{0.5}B^{V}_{0.5-y}P₂O₇, wherein x is 0 to 0.45 and y is 0 to 0.45. Also, cation defects may be generated due to charge compensation of the trivalent or the pentavalent metallic element, and thus a proton may be dissolved in the conductor by a reaction with water vapor. As a result, ionic conductivity of the inorganic ion conductor is improved.

Moreover, as shown in Formula 1, the inorganic ion conductor has a structure in which a content of the trivalent and pentavalent metallic elements compared to a content of P and O may not satisfy a stoichiometric composition. Due to such structure, more lattice defects in the compound may be generated than in a compound in which a content of P and O satisfies a stoichiometric composition, such as Sn_{0.9}In_{0.1}P₂O₇. Thus a concentration of protons that may be introduced in the compound is increased, thereby improving ionic conductivity of the inorganic ion conductor.

In an embodiment the inorganic ion conductor may have peak conductivity in different temperature regions depending on a type of the pentavalent metallic element. Thus, an inorganic ion conductor having excellent ionic conductivity at various temperature ranges may be provided by selecting a type of the pentavalent metallic element. For example, the inorganic ion conductor may provide a conductor that is suitable for use at a plurality of temperature zones within a temperature range of 100°C to 400°C. For example, if the pentavalent metallic element is Ta, the inorganic ion conductor may have high ionic conductivity at a temperature of 200°C to 400°C. Also, if the pentavalent metallic element is Sb or Nb, the inorganic ion conductor may have excellent ionic conductivity at a lower temperature, e.g., 100°C to 200°C. The conductivity of the inorganic ion conductor, when measured between 10 to 10⁶ Hz and an AC having an amplitude of 10 mV, may be greater than 0.025 Siemens per centimeter (Scm⁻¹), specifically greater than 0.04 Scm⁻¹, more specifically greater than 0.06 Scm⁻¹ at 100°C. The conductivity of the inorganic ion conductor, when measured between 10 to 10⁶ Hz and using an AC having an amplitude of 10 mV, may be greater than 0.05 Siemens per centimeter (Scm⁻¹), specifically greater than 0.06 Scm⁻¹, more specifically greater than 0.1 Scm⁻¹ at 200°C.

The inorganic ion conductor may have a crystal structure which is identical to or similar to, e.g., isostructural with, a crystalline phase of the formula MP₂O₇ (wherein M is a tetravalent metallic element, for example, at least one selected from Sn, Zr, and Ti) as described above, and if the inorganic ion conductor has such crystal structure, the inorganic ion conductor provides excellent conductivity.

The crystalline phase of the pyrophosphate of the formula MP₂O₇ may have a peak of greatest intensity in a range of about 15 degrees to about 25 degrees two-theta (a Bragg angle, 2θ), when analyzed by X-ray diffraction with CuK-α X-ray radiation having wavelength of 154. 1 pm (i.e. 1.541 Angstroms (Å)). Here, the peak of greatest intensity refers to a diffraction peak that has an intensity greater than any other peak between 5 and 80 degrees 2θ.

The inorganic ion conductor may have excellent conductivity if the peak of greatest intensity in a range of 15 degrees to 25 degrees, when analyzed using CuK-α X-ray radiation having wavelength of 154.1 pm, i.e., 1.541Å, appears in a region corresponding to a crystalline phase of SnP₂O₇. An example of such an inorganic ion conductor may be Fe₀.₅Ta₀.₅P₂O₇, Fe_{0.5}Nb_{0.5}P₂O₇, or In_{0.5}Sb_{0.5}P₂O₇. A combination comprising at least one of the foregoing can be used.

The region corresponding to the crystalline phase of SnP₂O₇ is in a range of 15 degrees to 25 degrees 2θ and/or in a range of 30 degrees to 40 degrees 2θ, and a peak of greatest intensity is in a range of 15 degrees to 25 degrees 2θ, when analyzed using CuK-α X-ray radiation having wavelength of 154.1 pm, i.e., 1.541Å.

A composition of the inorganic ion conductor may be confirmed using an X-ray fluorescence spectrometer (XRF).

The inorganic ion conductor may be, for example, at least one selected from In_{0.5}Sb_{0.5}P₂O₇, Sb^{III}_{0.5}Sb^{V}_{0.5}P₂O₇, Fe_{0.5}Sb_{0.5}P₂O₇, Al_{0.5}Sb_{0.5}P₂O₇, Ga_{0.5}Sb_{0.5}P₂O₇, Y_{0.5}Sb_{0.5}P₂O₇, Bi_{0.5}Sb_{0.5}P₂O₇, Fe_{0.5}Nb_{0.5}P₂O₇, Ga_{0.5}Nb_{0.5}P₂O₇, Y_{0.5}Nb_{0.5}P₂O₇, La₀.₅Nb_{0.5}P₂O₇, Nd_{0.5}Nb_{0.5}P₂O₇, Sm_{0.5}Nb_{0.5}P₂O₇, Fe_{0.5}Ta_{0.5}P₂O₇, Ga_{0.5}Ta_{0.5}P₂O₇, Al_{0.5}Ta_{0.5}P₂O₇, Bi_{0.5}Ta_{0.5}P₂O₇, In_{0.5}Ta_{0.5}P₂O₇, Sb_{0.5}Ta_{0.5}P₂O₇, La_{0.5}Ta_{0.5}P₂O₇, SM_{0.5}Ta_{0.5}P₂O₇, Y_{0.5}Ta_{0.5}P₂O₇, In_{0.45}Sb_{0.5}P₂O₇, In_{0.40}Sb_{0.5}P₂O₇, In_{0.35}Sb_{0.5}P₂O₇, In_{0.3}Sb_{0.5}P₂O₇, In_{0.5}Sb_{0.45}P₂O₇, In_{0.5}Sb_{0.4}P₂O₇, In_{0.5}Sb_{0.35}P₂O₇, In_{0.5}Sb_{0.3}P₂O₇, Fe_{0.45}Sb_{0.5}P₂O₇, Fe_{0.40}Sb_{0.5}P₂O₇, Fe_{0.35}Sb_{0.5}P₂O₇, Fe_{0.30}Sb_{0.5}P₂O₇, Fe_{0.5}Sb_{0.45}P₂O₇, Fe_{0.5}Sb_{0.40}P₂O₇, Fe_{0.5}Sb_{0.35}P₂O₇, Fe_{0.5}Sb_{0.3}P₂O₇, Fe_{0.45}Ta_{0.5}P₂O₇, Fe_{0.40}Ta_{0.5}P₂O₇, Fe_{0.35}Ta_{0.5}P₂O₇, Fe_{0.30}Ta_{0.5}P₂O₇, Fe_{0.5}Ta_{0.45}P₂O₇, Fe_{0.5}Ta_{0.4}P₂O₇, Fe_{0.5}Ta_{0.35}P₂O₇, and Fe_{0.5}Ta_{0.3}P₂O₇.

Hereinafter, a method of forming an inorganic ion conductor including a trivalent metallic element, a pentavalent metallic element, P, and O is further disclosed.

First, a trivalent metallic element precursor, a pentavalent metallic element precursor, and a phosphorus precursor are contacted to prepare a mixture. The trivalent metallic element precursor may be suitable to provide element A in Formula 1, and the pentavalent metallic element precursor may be suitable to provide element B in Formula 1.

While preparing the mixture, a solvent may be added thereto and mixed therein. If a solvent is used in this regard, all components in the mixture may be uniformly mixed.

The solvent may comprise at least one selected from, distilled water, an alcohol, and a polyol. The alcohol may comprise at least one selected from methanol, ethanol, propanol, isopropyl alcohol, and butanol. The polyol may comprise at least one selected from polyethylene glycol, polypropylene glycol, 1,4-butanediol, pentaerythritol, 2,3-butanediol, ethylene glycol, propylene glycol, trimethylene glycol, 1,4-dihydroxy-2-butene, 1,12-dihydroxyoctadecane, 1,4-dihydroxycyclohexane, 2,2-dimethyl-1,3-propanediol, 2-ethyl-2-butylpropanediol, glycerol, erythritol, sorbitol, mannitol, inositol, trimethylol propane, dipentaerythritol, polybutadiene diol, polytetramethylenediol, and polycaprolactone diol. A content of the solvent may be in a range of 300 parts to 800 parts by weight, based on 100 parts by weight of the trivalent metallic element precursor.

When the content of the solvent is within the foregoing range, a viscosity of the composition may be appropriate for handling a preparation of the inorganic ion conductor.

The mixture is stirred. The stirring process may be performed at a temperature of, for example, 200°C to 300°C, specifically 225°C to 275°C.

When the mixture is stirred within the temperature range above, the components of the mixture are uniformly mixed, and water is removed from the composition, and thus the viscosity of the mixture is maintained appropriately. When the viscosity of the mixture is selected as described above, a subsequent thermal treatment process may be efficiently performed, without the composition undergoing phase separation.

Subsequently, the composition is thermally treated at a temperature of 300°C to 1200°C, specifically 350°C to 1100°C, for example, at 450°C. The thermally treated composition may be ground into a powder having a selected particle size, thereby completing the forming of the inorganic ion conductor.

When the mixture is thermally treated at a temperature within the range above, an inorganic ion conductor having excellent ionic conductivity may be obtained without a structural change. A thermal treatment time may be selected depending on the thermal treatment temperature. For example, the thermal treatment time may be from 30 minutes to 20 hours, specifically 1 hour to 5 hours, more specifically 2 hours to 4 hours.

The thermal treatment may be performed in an inert gas atmosphere or in an air atmosphere.

The trivalent metallic element precursor may comprise at least one selected from an oxide, a chloride, a hydroxide, and a nitrate. The trivalent metallic element precursor may comprise element A of Formula 1, and may be suitable to provide element A of the compound of Formula 1. The trivalent metallic element precursor may comprise at least one selected from indium oxide, antimony oxide, iron oxide, aluminum oxide, gallium oxide, yttrium oxide, bismuth oxide, neodymium oxide, samarium oxide, indium chloride, antimony chloride, iron chloride, aluminum chloride, gallium chloride, yttrium chloride, bismuth chloride, neodymium chloride, samarium chloride, indium hydroxide, antimony hydroxide, iron hydroxide, aluminum hydroxide, gallium hydroxide, yttrium hydroxide, bismuth hydroxide, neodymium hydroxide, samarium hydroxide, indium nitrate, antimony nitrate, iron nitrate, aluminum nitrate, gallium nitrate, yttrium nitrate, bismuth nitrate, neodymium nitrate, and samarium nitrate, for example.

The pentavalent metallic element precursor may comprise at least one selected from an oxide, a chloride, a hydroxide, and a nitrate. The pentavalent metallic element precursor may comprise element B of Formula 1, and may be suitable to provide element B of the compound of Formula 1. The pentavalent metallic element precursor may comprise at least one selected from antimony oxide, niobium oxide, tantalum oxide, antimony hydroxide, niobium hydroxide, tantalum hydroxide, antimony chloride, niobium chloride, tantalum chloride, antimony nitrate, niobium nitrate, tantalum nitrate, vanadium nitrate, vanadium chloride, bismuth nitrate, and bismuth chloride, for example.

A content of the pentavalent metallic element precursor and the trivalent metallic element precursor are appropriately selected to provide the inorganic ion conductor.

The phosphorus precursor may comprise at least one selected from phosphoric acid and phosphonic acid, and the like.

The phosphoric acid may comprise an aqueous phosphoric acid solution, specifically an 80 to 100 weight percent (wt%) aqueous phosphoric acid solution. If an 85 wt% aqueous phosphoric acid solution is used, a content of the phosphoric acid may be 200 parts to 300 parts by weight, specifically about 225 parts to about 275 parts by weight, based on 100 parts by weight of the trivalent metallic element precursor. When the content of the phosphoric acid is within this range, the phosphoric acid may facilitate preparation of the inorganic ion conductor, taking into consideration a loss of phosphoric acid during the thermal treatment process of the composition for forming the inorganic ion conductor.

In the grinding process, although an average particle diameter obtained is not particularly limited, the product from the thermal treatment may be ground so as to have an average particle diameter of 50 nanometers (nm) to 5000 nm, specifically 100 nm to 4500 nm.

The inorganic ion conductor powder may be obtained in a form of a molded product by processing and press-molding the powder. The molded product may be used as, for example, an electrolyte.

In the process of press-molding, a cold isostatic press (CIP) process may be used.

In an embodiment, an inorganic ion conductor represented by Formula 1 may be manufactured according to the method of forming an inorganic ion conductor including a trivalent metallic element, a pentavalent metallic element, P, and O described above, except that phosphoric acid is used as a phosphorus precursor.

The inorganic ion conductor has high ionic conductivity, and has an ionic conductivity suitable for a moderate-temperature (e.g., 100°C to 400°C) non-humidifying fuel cell system.

According to another embodiment, an electrode for a fuel cell including the inorganic ion conductor is provided.

The electrode for a fuel cell includes a catalyst layer including a catalyst and a binder.

The catalyst may comprise at least one selected from platinum (Pt), and an alloy of Pt and at least one metal selected from gold, palladium, rhodium, iridium, ruthenium, tin, molybdenum, cobalt, and chrome. Alternatively, the catalyst may be a supported catalyst in which a catalyst metal is supported on a carbon-based support. For example, the catalyst may comprise at least one catalyst metal selected from Pt, platinum-cobalt (Pt-Co), and platinum-ruthenium (Pt-Ru). To provide a supported catalyst, the catalyst metal may be disposed on a carbon-based support.

The binder may comprise at least one selected from poly(vinylidenefluoride), polytetrafluoroethylene, fluorinated ethylene propylene, styrene butadiene rubber, polyurethane, and tetrafluoroethylene-hexafluoroethylene copolymer. A content of the binder may be 0.001 part to 0.5 part by weight, based on 1 part by weight of the catalyst. When the content of the binder is within the range, binding capacity of the catalyst layer to a support is excellent.

According to another embodiment, an electrolyte membrane for a fuel cell including the inorganic ion conductor is provided.

A high performance, high efficiency fuel cell system may be implemented by using the electrolyte membrane and/or the electrode. Also, the inorganic ion conductor may be used as a solid electrolyte in a low-temperature SOFC (e.g., an SOFC operating at 300°C to 500°C). Also, the inorganic ion conductor may be used in an electrochemical device, such as a catalyst support for purifying an exhaust gas, as an automotive material, or the like.

According to another embodiment, a fuel cell including the inorganic ion conductor is provided.

The fuel cell uses the molded product including the inorganic ion conductor as an electrolyte membrane, which is interposed between a cathode and an anode. The fuel cell has excellent cell potential and output density characteristics at a moderate temperature, e.g., 100°C to 400°C, specifically 200°C to 400°C, in non-humidified conditions.

The electrolyte membrane may be used in an SOFC, a PEMFC, or the like, but is not particularly limited thereto.

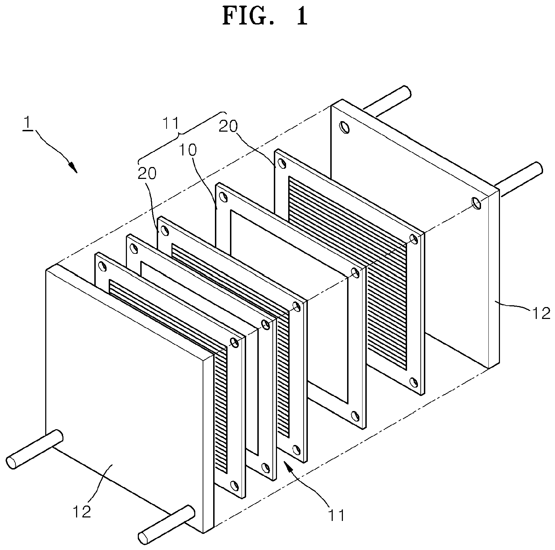

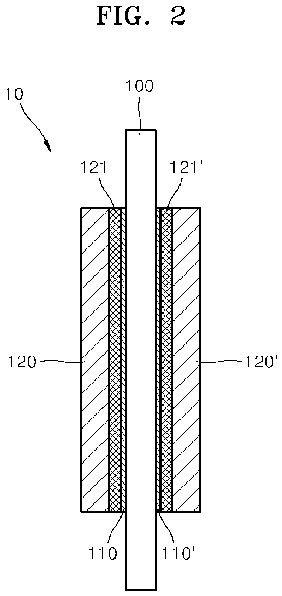

FIG. 1 is a perspective exploded view of a fuel cell according to an embodiment, and FIG. 2 is a cross-sectional diagram of a membrane-electrode assembly (MEA) which is included in the fuel cell of FIG. 1.

Referring to FIG. 1, a fuel cell 1 includes a unit cell 11 that is supported by a pair of holders 12. Each unit cell 11 includes an MEA 10, and bipolar plates 20 disposed on opposite lateral sides of the MEA 10. Each bipolar plate 20 includes a conductive metal, carbon, or the like, and operates as a current collector, while providing oxygen and fuel to catalyst layers of the corresponding MEA 10.

Although only two unit cells 11 are shown in FIG. 1, the number of unit cells is not limited to two and a fuel cell may have any number of unit cells, e.g., several tens or hundreds of unit cells, as desired.

As shown in FIG. 2, the MEA 10 includes an electrolyte membrane 100, catalyst layers 110 and 110' disposed on opposite lateral sides of the electrolyte membrane 100, and first gas diffusion layers 121 and 121' respectively disposed on the catalyst layers 110 and 110', respectively, and second gas diffusion layers 120 and 120' respectively disposed on the first gas diffusion layers 121 and 121', respectively.

The electrolyte membrane 100 comprises the inorganic ion conductor disclosed herein.

The catalyst layers 110 and 110' respectively operate as a fuel electrode and an oxygen electrode, each including a catalyst and a binder therein. The catalyst layers 110 and 110' may further include a material that may increase an electrochemical surface area of the catalyst.

The first gas diffusion layers 121 and 121' and the second gas diffusion layers 120 and 120' may each comprise a porous conductive material such as, for example, carbon sheet or carbon paper. The first gas diffusion layers 121 and 121' and the second gas diffusion layers 120 and 120' diffuse oxygen and fuel, respectively, which are supplied by a flow-field of the bipolar plates 20 into entire surfaces of the catalyst layers 110 and 110'.

The fuel cell 1 including the MEA 10 may suitably operate at a temperature of, for example, 150°C to 400°C. A fuel, such as hydrogen, is supplied through the flow-field of one of the bipolar plates 20 into a first catalyst layer, and an oxidant, such as oxygen in air, is supplied through the flow-field of the other bipolar plate 20 to a second catalyst layer. In an embodiment, hydrogen is oxidized into protons in the first catalyst layer, and the protons are conducted to the second catalyst layer through the electrolyte membrane 100. Then, the protons electrochemically react with oxygen in the second catalyst layer to produce water and electrical energy. Hydrogen produced by reforming a hydrocarbon or an alcohol may be used as the fuel. Oxygen may be used as the oxidant and may be supplied in a form of air.

Hereinafter, an exemplary embodiment will be described in further detail with reference to the following examples. These examples shall not limit the scope of the disclosed embodiment.

### Example 1: Preparation of an inorganic ion conductor

An inorganic ion conductor of Formula 1 wherein A is In and Q is Sb was manufactured according to the following processes.

In₂O₃, Sb₂O₅, and 85 wt% aqueous H₃PO₄ were mixed in amounts to provide a molar ratio of Sb: In: P= 0.5: 0.5: 2.0∼2.8, and distilled water, was added to obtain a mixture. Then, the mixture was stirred at about 300°C to obtain a viscous paste.

The viscous paste was placed in a ceramic crucible and thermally treated at a temperature of 450°C for 2.5 hours.

Next, the lump product resulting from the thermal treatment process was ground with a mortar, to prepare In_{0.5}Sb_{0.5}P₂O₇ as a powder. In consideration of a partial loss of phosphoric acid during the thermal treatment process, an initial content of phosphoric acid added to the inorganic proton conductor was determined to have a final stoichiometric composition of the inorganic ion conductor shown in Example 1 of Table 1 below.

### Examples 2 to 22: Preparation of inorganic ion conductors

Inorganic ion conductors shown in Table 1 were each obtained as a powder in the same manner as in Example 1, except that a precursor having a molar ratio of A:Q:P corresponding to the molar ratios shown in Table 1 was used to obtain each of inorganic ion conductors of Formula 1 having compositions as shown in Table 1 below.

It is noted that examples 2-7, 9-13 and 15-22 fall outside the scope of the claimed invention and are shown as background examples only.

**Table 1**

| Example | Formula 1 | | | | | Inorganic ion conductor |
|---|---|---|---|---|---|---|
| | A | Q | A precursor | Q precursor | Molar ratio of A:Q:P | |
| Example 1 | In | Sb | In₂O₃ | Sb₂O₅ | 0.5:0.5:2.0∼2.8 | In_{0.5}Sb_{0.5}P₂O₇ |
| Example 2 | Sb | Sb | Sb₂O₃ | Sb₂O₅ | 0.5:0.5:2.0∼2.8 | Sb^{III}_{0.5}Sb^{V}_{0.5}P₂O₇ |
| Example 3 | Fe | Sb | Fe₂O₃ | Sb₂O₅ | 0.5:0.5:2.0∼2.8 | Fe_{0.5}Sb_{0.5}P₂O₇ |
| Example 4 | Al | Sb | Al₂O₃ | Sb₂O₅ | 0.5:0.5:2.0∼2.8 | Al_{0.5}Sb_{0.5}P₂O₇ |
| Example 5 | Ga | Sb | Ga₂O₃ | Sb₂O₅ | 0.5:0.5:2.0∼2.8 | Ga_{0.5}Sb_{0.5}P₂O₇ |
| Example 6 | Y | Sb | Y₂O₃ | Sb₂O₅ | 0.5:0.5:2.0∼2.8 | Y_{0.5}Sb_{0.5}P₂O₇ |
| Example 7 | Bi | Sb | Bi₂O₃ | Sb₂O₅ | 0.5:0.5:2.0∼2.8 | Bi_{0.5}Sb_{0.5}P₂O₇ |
| Example 8 | Fe | Nb | Fe₂O₃ | Nb₂O₅ | 0.5:0.5:2.0∼2.8 | Fe_{0.5}Nb_{0.5}P₂O₇ |
| Example 9 | Ga | Nb | Ga₂O₃ | Nb₂O₅ | 0.5:0.5:2.0∼2.8 | Ga_{0.5}Nb_{0.5}P₂O₇ |
| Example 10 | Y | Nb | Y₂O₃ | Nb₂O₅ | 0.5:0.5:2.0∼2.8 | Y_{0.5}Nb_{0.5}P₂O₇ |
| Example 11 | La | Nb | La₂O₃ | Nb₂O₅ | 0.5:0.5:2.0∼2.8 | La_{0.5}Nb_{0.5}P₂O₇ |
| Example 12 | Nd | Nb | Nd₂O₃ | Nb₂O₅ | 0.5:0.5:2.0∼2.8 | Nd_{0.5}Nb_{0.5}P₂O₇ |
| Example 13 | Sm | Nb | Sm₂O₃ | Nb₂O₅ | 0.5:0.5:2.0∼2.8 | Sm_{0.5}Nb_{0.5}P₂O₇ |
| Example 14 | Fe | Ta | Fe₂O₃ | Ta₂O₅ | 0.5:0.5:2.0∼2.8 | Fe_{0.5}Ta_{0.5}P₂O₇ |
| Example 15 | Ga | Ta | Ga₂O₃ | Ta₂O₅ | 0.5:0.5:2.0∼2.8 | Ga_{0.5}Ta_{0.5}P₂O₇ |
| Example 16 | Al | Ta | Al₂O₃ | Ta₂O₅ | 0.5:0.5:2.0∼2.8 | Al₀.₅Ta_{0.5}P₂O₇ |
| Example 17 | Bi | Ta | Bi₂O₃ | Ta₂O₅ | 0.5:0.5:2.0∼2.8 | Bi₀₅Ta_{0.5}P₂O |
| Example 18 | In | Ta | In₂O₃ | Ta₂O₅ | 0.5:0.5:2.0∼2.8 | In_{0.5}Ta_{0.5}P₂O₇ |
| Example 19 | Sb | Ta | Sb₂O₃ | Ta₂O₅ | 0.5:0.5:2.0∼2.8 | Sb_{0.5}Ta_{0.5}P₂O₇ |
| Example 20 | La | Ta | La₂O₃ | Ta₂O₅ | 0.5:0.5:2.0∼2.8 | La_{0.5}Ta_{0.5}P₂O₇ |
| Example 21 | Sm | Ta | Sm₂O₃ | Ta₂O₅ | 0.5:0.5:2.0∼2.8 | Sm_{0.5}Ta_{0.5}P₂O₇ |
| Example 22 | Y | Ta | Y₂O₃ | Ta₂O₅ | 0.5:0.5:2.0∼2.8 | Y_{0.5}Ta_{0.5}P₂O₇ |

### Examples 23 to 30: Preparation of inorganic ion conductors

Inorganic ion conductors were manufactured in the same manner as in Example 1, except that contents of In₂O₃ and Sb₂O₅ were each selected to have In and Sb compositions as shown in Table 2 below.

**Table 2**

| Example | Inorganic ion conductor | | | |
|---|---|---|---|---|
| | Content of In (mol) | Content of Sb (mol) | Molar ratio of In:Sb:P | Composition |
| Example 23 | 0.45 | 0.5 | 0.45:0.5:2.0∼2.8 | In_{0.45}Sb_{0.5}P₂O₇ |
| Example 24 | 0.40 | 0.5 | 0.40:0.5:2.0∼2.8 | In_{0.40}Sb_{0.5}P₂O₇ |
| Example 25 | 0.35 | 0.5 | 0.35:0.5:2.0∼2.8 | In_{0.35}Sb_{0.5}P₂O₇ |
| Example 26 | 0.30 | 0.5 | 0.30:0.5:2.0∼2.8 | In_{0.3}Sb_{0.5}P₂O₇ |
| Example 27 | 0.5 | 0.45 | 0.5:0.45:2.0∼2.8 | In_{0.5}Sb_{0.45}P₂O₇ |
| Example 28 | 0.5 | 0.40 | 0.5:0.4:2.0∼2.8 | In₀.₅Sb_{0.4}P₂O₇ |
| Example 29 | 0.5 | 0.35 | 0.5:0.35:2.0∼2.8 | In_{0.5}Sb_{0.35}P₂O₇ |
| Example 30 | 0.5 | 0.30 | 0.5:0.30:2.0∼2.8 | In_{0.5}Sb_{0.3}P₂O₇ |

### Examples 31 to 38: Preparation of inorganic ion conductors

Inorganic ion conductors were manufactured in the same manner as in Example 8, except that contents of Fe₂O₃ and Nb₂O₅ were each selected to provide Fe and Nb compositions as shown in Table 3 below.

**Table 3**

| Example | Inorganic ion conductor | | | |
|---|---|---|---|---|
| | Content of Fe (mol) | Content of Nb (mol) | Molar ratio of Fe:Nb:P | Composition |
| Example 31 | 0.45 | 0.5 | 0.45:0.5:2.0∼2.8 | Fe_{0.45}Nb_{0.5}P₂O₇ |
| Example 32 | 0.40 | 0.5 | 0.4:0.5:2.0∼2.8 | Fe₀.₄₀Nb_{0.5}P₂O₇ |
| Example 33 | 0.35 | 0.5 | 0.35:0.5:2.0∼2.8 | Fe_{0.35}Nb_{0.5}P₂O₇ |
| Example 34 | 0.30 | 0.5 | 0.3:0.5:2.0∼2.8 | Fe₀.₃₀Nb_{0.5}P₂O₇ |
| Example 35 | 0.5 | 0.45 | 0.5:0.45:2.0∼2.8 | Fe_{0.5}Nb_{0.45}P₂O₇ |
| Example 36 | 0.5 | 0.40 | 0.5:0.4:2.0∼2.8 | Fe_{0.5}Nb_{0.40}P₂O₇ |
| Example 37 | 0.5 | 0.35 | 0.5:0.35:2.0∼2.8 | Fe_{0.5}Nb_{0.35}P₂O₇ |
| Example 38 | 0.5 | 0.30 | 0.5:0.30:2.0∼2.8 | Fe₀.₅Nb_{0.3}P₂O₇ |

### Examples 39 to 46: Preparation of inorganic ion conductors

Inorganic ion conductors were manufactured in the same manner as in Example 8, except that contents of Fe₂O₃ and Ta₂O₅ were each selected to provide Fe and Ta compositions as shown in Table 4 below.

**Table 4**

| Example | Content of Fe (mol) | Content of Ta (mol) | Molar ratio of Fe:Ta:P | Composition |
|---|---|---|---|---|
| Example 39 | 0.45 | 0.5 | 0.45:0.5:2.0∼2.8 | Fe_{0.45}Ta_{0.5}P₂O₇ |
| Example 40 | 0.40 | 0.5 | 0.4:0.5:2.0∼2.8 | Fe_{0.40}Ta_{0.5}P₂O₇ |
| Example 41 | 0.35 | 0.5 | 0.35:0.5:2.0∼2.8 | Fe_{0.35}Ta_{0.5}P₂O₇ |
| Example 42 | 0.30 | 0.5 | 0.3:0.5:2.0∼2.8 | Fe_{0.30}Ta_{0.5}P₂O₇ |
| Example 43 | 0.5 | 0.45 | 0.5:0.45:2.0∼2.8 | Fe_{0.5}Ta_{0.45}P₂O₇ |
| Example 44 | 0.5 | 0.40 | 0.5:0.40:2.0∼2.8 | Fe_{0.5}Ta_{0.4}P₂O₇ |
| Example 45 | 0.5 | 0.35 | 0.5:0.35:2.0∼2.8 | Fe_{0.5}Ta_{0.35}P₂O₇ |
| Example 46 | 0.5 | 0.30 | 0.5:0.30:2.0∼2.8 | Fe_{0.5}Ta_{0.3}P₂O₇ |

### Comparative Example 1: Preparation of SnP₂O₇

SnO₂, H₃PO₄, and distilled water were mixed, and then the mixture was stirred at 300°C to obtain a viscous paste.

The paste was placed in a ceramic crucible and thermally treated at a temperature of 650°C for 2.5 hours.

Next, the thermally treated product was ground with a mortar, to prepare an SnP₂O₇ powder.

### Comparative Example 2: Preparation of Sn_{0.9}In_{0.1}P₂O₇

SnO₂, In₂O₃, and 85 wt% aqueous H₃PO₄ were mixed in a molar ratio of Sn: In: P= 0.9: 0.1: 2.0∼2.8. Deionized water was added to the mixture and then the mixture was stirred at about 250°C to obtain a mixed paste having a high viscosity. The mixed paste was thermally treated in an alumina crucible at 650°C for 2.5 hours.

The lump product resulting from the thermal treatment was ground with a mortar, to prepare Sn_{0.9}In_{0.1}P₂O₇ as a milk-white powder.

### Evaluation Example 1: Measurement of conductivity

### 1) Conductivity change according to change in composition of a pentavalent metal

The inorganic ion conductor powders of the Examples and Comparative Examples were each made into a pellet (diameter: about 12 millimeter (mm), thickness: about 2 mm) using a press and a cold isostatic press process (CIP).

A cell was manufactured using gold (Au) electrodes attached on opposite sides of the pellet, and impedance thereof was measured in a non-humidified air atmosphere and evaluated to measure conductivity of the pellet.

The measurement of the impedance was performed at a frequency within a range of about 10 to about 10⁶ Hertz (Hz) and using an alternating current (AC) having an amplitude of 10 milliVolts (mV).

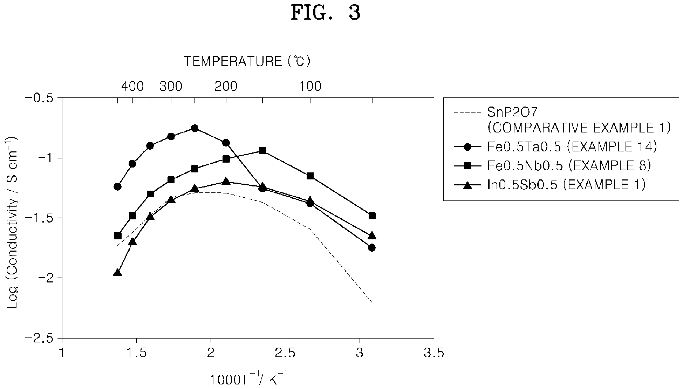

The results of the conductivity analysis are as shown in FIGS. 3 through 6.

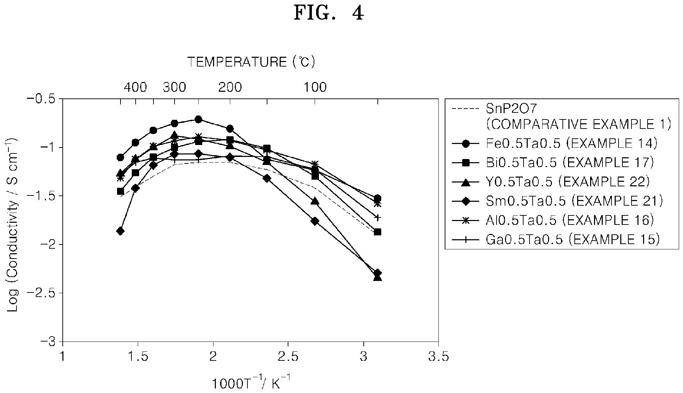

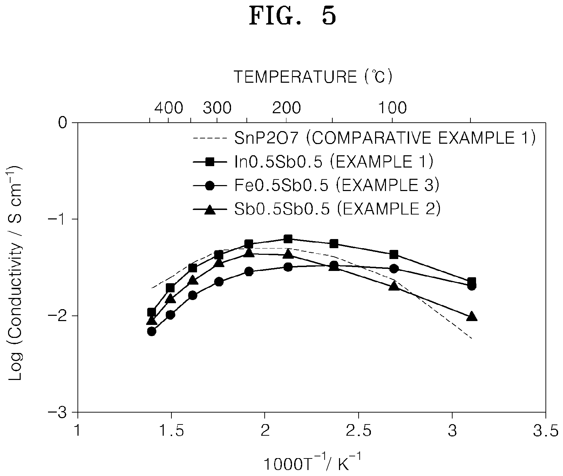

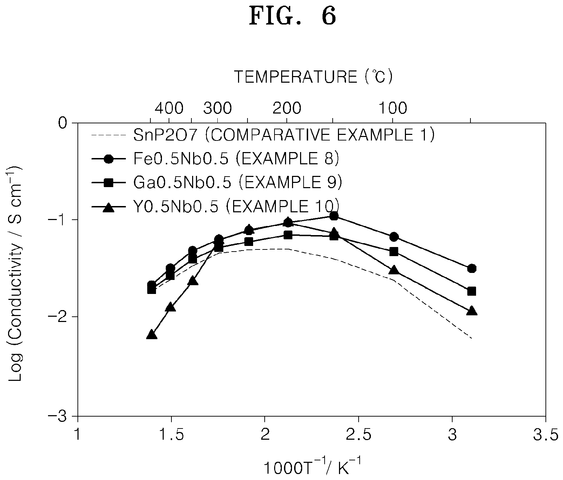

FIG. 3 shows the conductivity of the inorganic ion conductors of Examples 1, 8, and 14, and Comparative Example 1. FIG. 4 shows conductivity of the inorganic ion conductors of Examples 14 to 16, 17, 21, and 22, and Comparative Example 1. FIG. 5 shows conductivity of the inorganic ion conductors of Examples 1 to 3 and Comparative Example 1. FIG. 6 shows conductivity of the inorganic ion conductors of Examples 8 to 10 and Comparative Example 1.

Referring to FIGS. 3 and 4, with respect to the inorganic ion conductor using Ta as a pentavalent metallic element, the inorganic ion conductor provided improved conductivity at a moderate temperature range (e.g., about 100°C to about 400°C, specifically about 200°C to about 400°C). Referring to FIGS. 5 and 6, with respect to the inorganic ion conductors using Sb or Nb as a pentavalent metallic element, the inorganic ion conductors provided improved conductivity at a low temperature region (e.g., about 100°C to about 200°C). Therefore, it was confirmed that according to a kind of a pentavalent metallic element, a temperature range having a suitable conductivity may be selected.

### 2) Conductivity change according to change in composition of a pentavalent metal and a trivalent metal

The inorganic ion conductor powders of Examples 1, 14, 23 to 26, 31 to 33, and 38 to 42 were each made into a pellet (diameter: 12 mm, thickness: about 2 mm) by using a press and CIP.

A cell was manufactured using gold (Au) electrodes on both sides of the pellet, and impedance thereof was measured in a non-humidified air atmosphere and evaluated to measure conductivity of the pellet.

The measurement of the impedance was performed at a frequency within a range of about 10 to about 10⁶ Hz and using an AC having an amplitude of 10 mV.

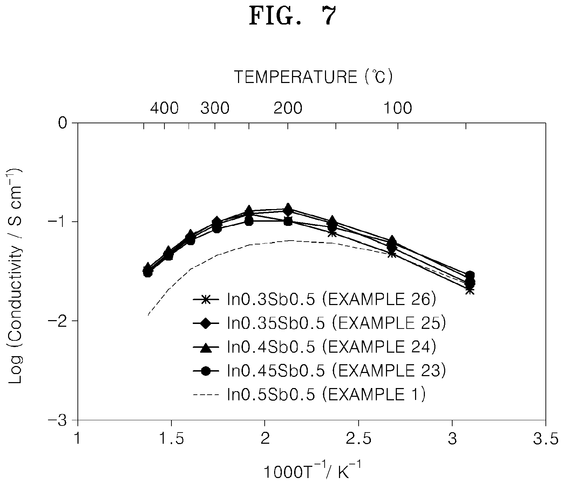

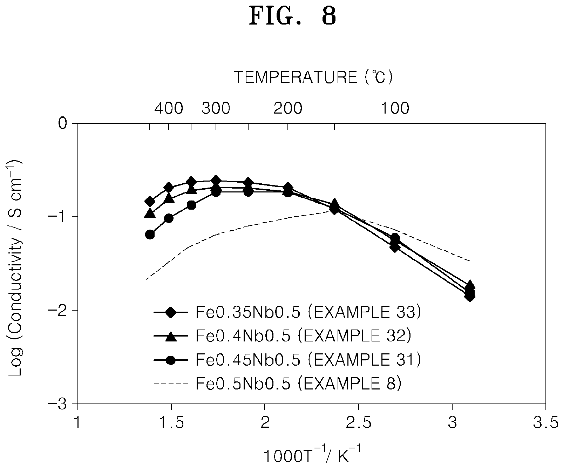

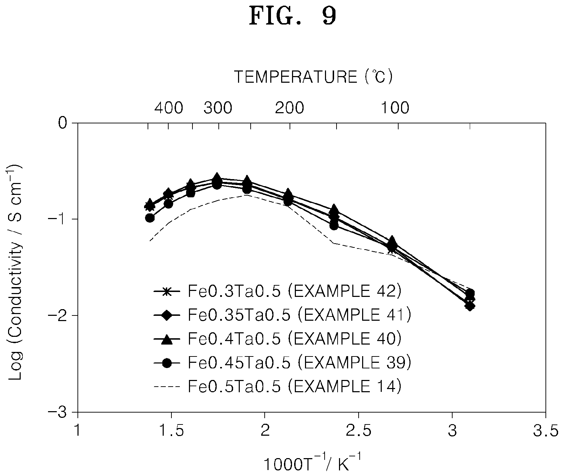

The results of the conductivity analysis are shown in FIGS. 7 through 9 and Table 5, which provides the conductivity of Examples 1, 8, 14, 24, 33, 40 and Comparative Example 1 at 100°C, 150°C, 200°C, 250°C, and 300°C. FIG. 7 shows the conductivity of the inorganic ion conductors of Examples 1 and 23 to 26. FIG. 8 shows conductivity of the inorganic ion conductors of Examples 8 and 31 to 33. FIG. 9 shows conductivity of the inorganic ion conductors of Examples 14 and 39 to 42.

Referring to FIGS. 7 through 9 and Table 5, it was confirmed that by changing a mixing ratio of a trivalent metallic element and a pentavalent metallic element of an inorganic ion conductor, cation defects of the inorganic ion conductor may be generated, and thus a concentration of protons in the inorganic ion conductor may be increased, and conductivity of the inorganic ion conductor may be further improved as a result.

**Table 5**

| Example | Composition | Conductivity (Scm⁻¹) | | | | |
|---|---|---|---|---|---|---|
| | | 100°C | 150°C | 200°C | 250°C | 300°C |
| Example 1 | In_{0.5}Sb_{0.5}P₂O₇ | 0.044 | 0.059 | 0.065 | 0.057 | - |
| Example 24 | In_{0.4}Sb_{0.5}P₂O₇ | 0.064 | 0.102 | 0.137 | 0.131 | 0.101 |
| Example 8 | Fe_{0.5}Nb_{0.5}P₂O₇ | 0.071 | 0.117 | 0.099 | 0.081 | 0.067 |
| Example 33 | Fe_{0.35}Nb_{0.5}P₂O₇ | 0.048 | 0.127 | 0.204 | 0.230 | 0.239 |
| Example 14 | Fe_{0.5}Ta_{0.5}P₂O₇ | 0.042 | 0.056 | 0.135 | 0.176 | 0.153 |
| Example 40 | Fe_{0.4}Ta_{0.5}P₂O₇ | 0.061 | 0.127 | 0.186 | 0.248 | 0.269 |
| Comparative Example 1 | SnP₂O₇ | 0.025 | 0.042 | 0.052 | 0.052 | 0.048 |

### Evaluation Example 2: X-ray diffraction (XRD) analysis

### 1) Comparison of XRD analysis of inorganic ion conductors of Examples 1, 8, and 14 and inorganic ion conductor of Comparative Example 1

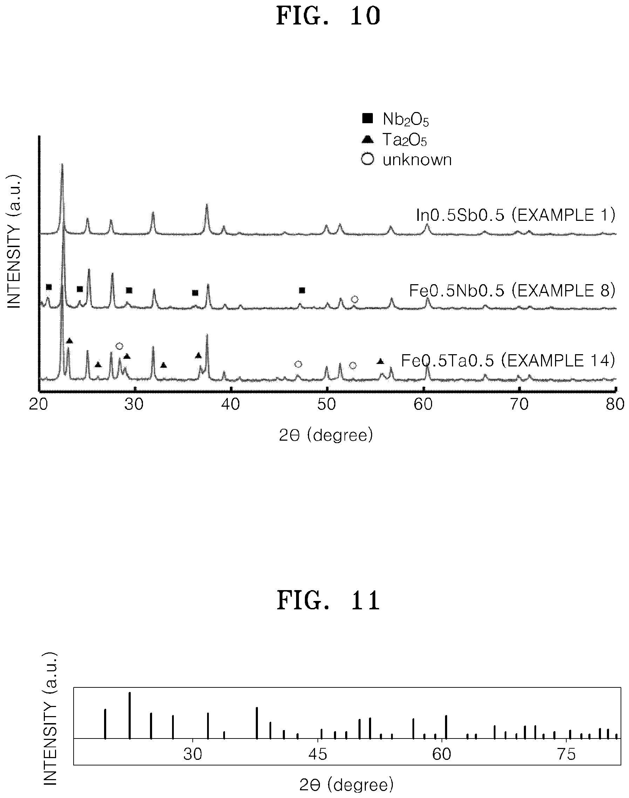

An XRD analysis (using MP-XRD, Xpert PRO, Philips / Power 3kW, CuK-α X-rays having wavelength of 154.1 pm, i.e., 1.541Å) of each of the inorganic ion conductors of Examples 1, 8, and 14 was performed, and the results thereof are shown in FIG. 10. Shown in FIG. 11 is a calculated idealized XRD pattern for SnP₂O₇ for a comparison with the results of the XRD analysis of FIG. 10.

Referring to FIG. 10, it was confirmed that a peak of greatest intensity was present in a region corresponding to a crystalline phase of SnP₂O₇, as shown in FIG. 11. The region corresponding to a crystalline phase of SnP₂O₇ refers to a Bragg angle (2θ) when using CuK-α X-rays having wavelength of 154.1 pm, i.e., 1.541Å from about 15 degrees to about 25 degrees 2θ or from about 30 degrees to about 40 degrees 2θ.

As described above, the inorganic ion conductors of Examples 1, 8, and 14 having a crystal structure very similar to that of a crystalline phase of SnP₂O₇ and had excellent conductivity, as shown in FIGS. 7 through 9.

### 2) Comparison of XRD analysis of the inorganic ion conductors of Examples 1 and 23 to 26 and comparison of XRD analysis of the inorganic ion conductors of Examples 1 and 27 to 30

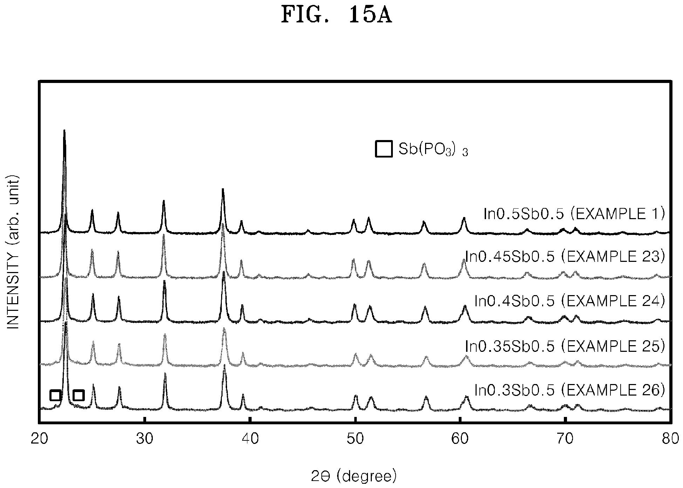

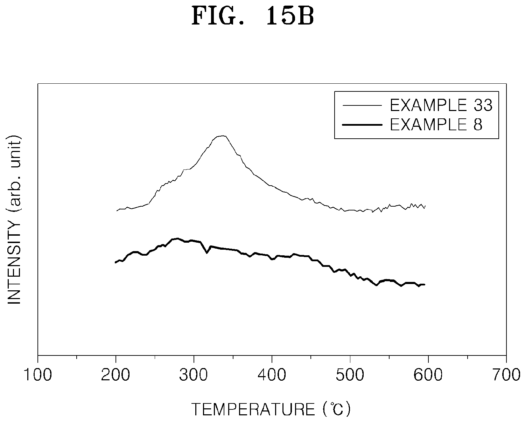

An XRD analysis (MP-XRD, Xpert PRO, Philips / Power 3kW, CuK-α X-rays having a wavelength of 154.1 pm, i.e., 1.541Å) of each of the inorganic ion conductors of Examples 1 and 23 to 26 was performed, and the results thereof is as shown in FIG. 15.

Referring to FIG. 15, it was confirmed that the inorganic ion conductors of Examples 23 to 26, which had less In-content than the inorganic ion conductor of Example 1, showed XRD patterns which were similar to that of the inorganic ion conductor of Example 1.

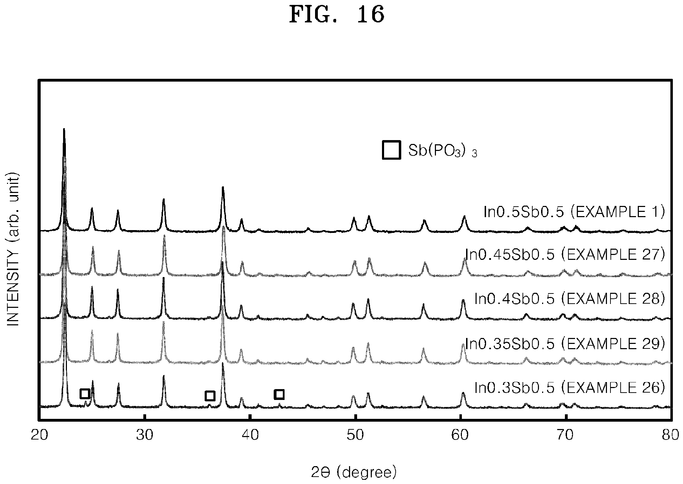

Also, an XRD analysis (MP-XRD, Xpert PRO, Philips / Power 3kW, CuK-α X-rays having a wavelength of 154.1 pm, i.e., 1.541Å) of each of the inorganic ion conductors of Examples 1 and 27 to 30 was performed, and the results thereof are as shown in FIG. 16.

Referring to FIG. 16, it was confirmed that the inorganic ion conductors of Examples 27 to 30, which had a Sb-content less than the inorganic ion conductor of Example 1, showed XRD patterns which were similar to that of the inorganic ion conductor of Example 1.

### 3) Comparison of XRD analysis of the inorganic ion conductors of Examples 8 and 31 to 33 and comparison of XRD analysis of the inorganic ion conductors of Examples 8 and 35 to 37

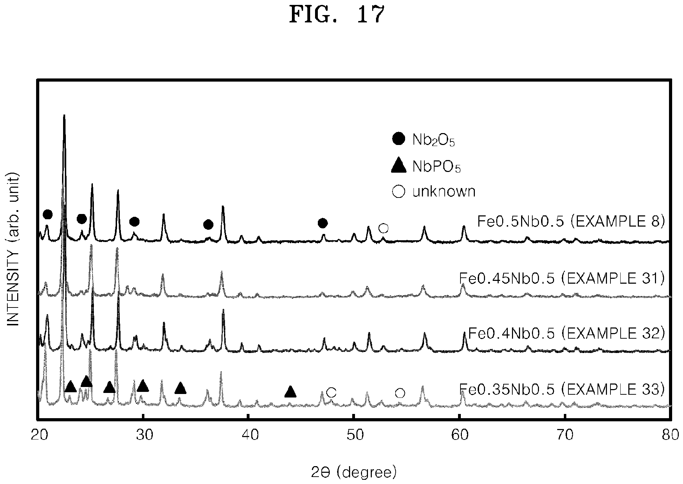

An XRD analysis (MP-XRD, Xpert PRO, Philips / Power 3kW, CuK-α X-rays having a wavelength of 154.1 pm, i.e., 1.541Å) of each of the inorganic ion conductors of Examples 8 and 31 to 33 was performed, and the results thereof are shown in FIG. 17.

Referring to FIG. 17, it was confirmed that the inorganic ion conductors of Examples 31 to 33, which had a Fe-content less than that of the inorganic ion conductor of Example 8, showed XRD patterns which were similar to that of the inorganic ion conductor of Example 8.

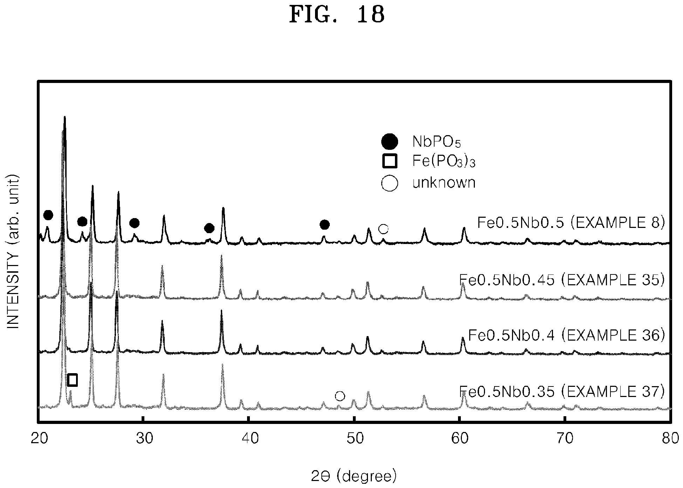

Also, an XRD analysis (MP-XRD, Xpert PRO, Philips / Power 3kW, CuK-α X-rays having a wavelength of 154.1 pm, i.e., 1.541Å) of each of the inorganic ion conductors of Examples 8 and 35 to 37 was performed, and the results thereof are shown in FIG. 18.

Referring to FIG. 18, it was confirmed that the inorganic ion conductors of Examples 35 to 37, which had a Nb-content less than that of the inorganic ion conductor of Example 8, showed XRD patterns which were similar to that of the inorganic ion conductor of Example 8.

### 4) Comparison of XRD analysis of the inorganic ion conductors of Examples 14 and 39 to 42 and comparison of XRD analysis of the inorganic ion conductors of Examples 14 and 43 to 46

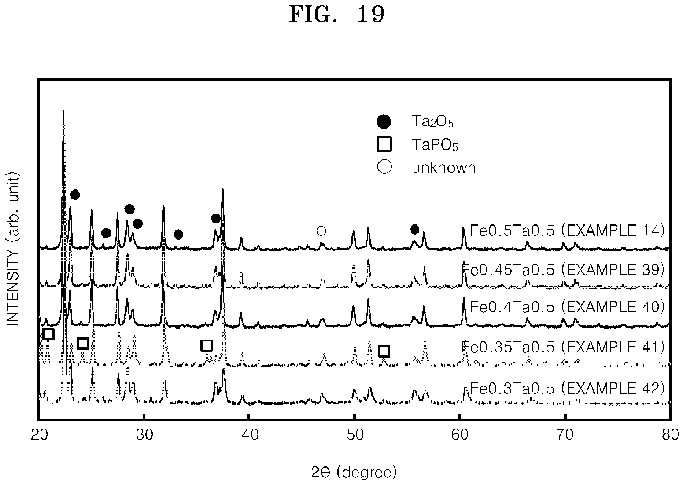

An XRD analysis (MP-XRD, Xpert PRO, Philips / Power 3kW, CuK-α X-rays having a wavelength of 154.1 pm, i.e., 1.541Å) of each of the inorganic ion conductors of Examples 14 and 39 to 42 was performed, and the results thereof is as shown in FIG. 19.

Referring to FIG. 19, it was confirmed that the inorganic ion conductors of Examples 39 to 42, which had a Fe-content less than that of the inorganic ion conductor of Example 14, showed XRD patterns which were similar to that of the inorganic ion conductor of Example 14.

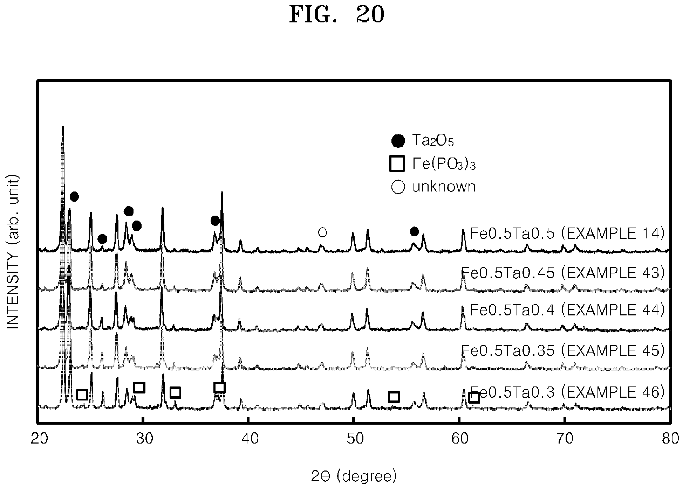

Also, an XRD analysis (MP-XRD, Xpert PRO, Philips / Power 3kW, CuK-α X-rays having a wavelength of 154.1 pm, i.e., 1.541Å) of each of the inorganic ion conductors of Examples 14 and 43 to 46 was performed, and the results thereof are shown in FIG. 20.

Referring to FIG. 20, it was confirmed that the inorganic ion conductors of Examples 43 to 46, which had less Ta-content than the inorganic ion conductor of Example 14, showed XRD patterns which were similar to that of the inorganic ion conductor of Example 14.

### 5) Comparison of XRD analysis of the inorganic ion conductors of Examples 3, 6, and 7

An XRD analysis (MP-XRD, Xpert PRO, Philips / Power 3kW, CuK-α X-rays having a wavelength of 154.1 pm, i.e., 1.541Å) of each of the inorganic ion conductors of Examples 3, 6, and 7 was performed. As a result of the XRD analysis, each crystalline phase of the inorganic ion conductors was analyzed and the results are shown in Table 6 below.

**Table 6**

| Example | Formula 1 | | Crystalline phase |
|---|---|---|---|
| | A | Q | |
| Example 3 | Fe | Sb | TiP₂O₇ |
| Example 6 | Y | Sb | Sb₂(P₂O₇)₂ |
| Example 7 | Bi | Sb | BiPO₄, Sb₂(P₂O₇)₂ |

### 6) Comparison of XRD analysis of inorganic ion conductors of Examples 9 to 13

An XRD analysis (MP-XRD, Xpert PRO, Philips / Power 3kW, CuK-α X-rays having a wavelength of 154.1 pm, i.e., 1.541Å) of each of the inorganic ion conductors of Examples 9 to 13 was performed. As a result of the XRD analysis, each crystalline phase of the inorganic ion conductors was analyzed and the results are shown in Table 7 below.

**Table 7**

| Example | Formula 1 | | Crystalline phase |
|---|---|---|---|
| | A | Q | |
| Example 9 | Ga | Nb | TiP₂O₇ |
| Example 10 | Y | Nb | ZrP₂O₇ |
| Example 11 | La | Nb | La₇P₃O₁₈, Nb₂O₅, Nb₅P₇O₃₀ |
| Example 12 | Nd | Nb | Nd₅P₅O₁₄, Nb₂O₅, Nb₅P₇O₃₀ |
| Example 13 | Sm | Nb | Sm₅P₉O₃₀, Nb₂O₅, Nb₅P₇O₃₀ |

### 7) Comparison of XRD analysis of inorganic ion conductors of Examples 16 to 22

An XRD analysis (MP-XRD, Xpert PRO, Philips / Power 3kW, CuK-α X-rays having a wavelength of 154.1 pm, i.e., 1.541Å) of each of the inorganic ion conductors of Examples 16 to 22 was performed. As a result of the XRD analysis, each crystalline phase of the inorganic ion conductors was analyzed and the results are shown in Table 8 below.

**Table 8**

| Example | Formula 1 | | Crystalline phase |
|---|---|---|---|
| | A | Q | |
| Example 16 | Al | Ta | TiP₂O₇ |
| Example 17 | Bi | Ta | ZrP₂O₇ |
| Example 18 | In | Ta | In₂O₃, In(PO₃)₃, Ta₂PO₅ |
| Example 19 | Sb | Ta | Ta₂PO₅ |
| Example 20 | La | Ta | La₂P₅O₁₄, Ta₂PO₅ |
| Example 21 | Sm | Ta | ZrP₂O₇ |
| Example 22 | Y | Ta | ZrP₂O₇ |

### Evaluation Example 3: Cell performance

### 1) Measurement of cell performance using the inorganic ion conductors of Example 40 and Comparative Example 2

The powders of Example 40 and Comparative Example 2 were press-molded under a pressure of 1 X 10³ kilograms per square centimeter (kg/cm²) using a press and CIP to obtain a pellet (diameter: about 12 mm, thickness: about 1.0 mm) as a press-molded product.

The pellet was used as an electrolyte membrane, and Pt/C-coated carbon papers (electrodes available from ElectroChem, 2 milligrams platinum per square centimeter (mgPt/cm²) were attached to opposite sides of the electrolyte membrane to manufacture a cell.

The cell was placed between two Pt-mesh current collectors to form a Pt-mesh/cell/Pt-mesh stack.

While the stack was placed between upper and lower alumina tubes, the structure was gas-sealed by coating and drying an inorganic sealant on the structure.

In order to test the performance of the fuel cell, non-humidified H₂ and non-humidified air were supplied to an anode and a cathode, respectively, at about 50 cubic centimeters per minute (ccm) and about 100 ccm, respectively. Also, while operating the cell at 100°C, 150°C, 200°C, or 250°C, a cell potential and an output density according to a current density were evaluated.

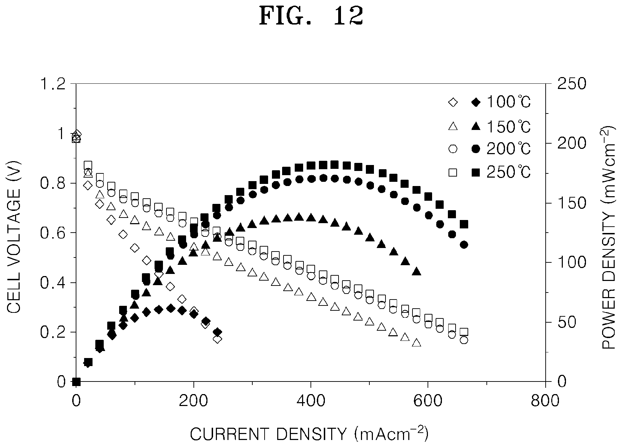

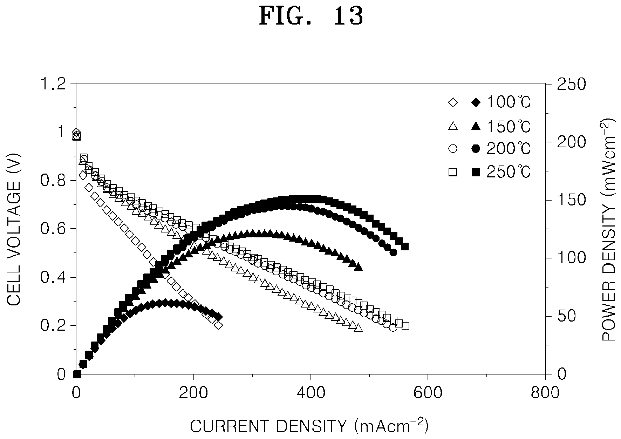

The results of the cell potential evaluation of the cells including the inorganic ion conductor of Example 40 and Comparative Example 2 are shown in FIGS. 12 and 13, respectively.

Referring to FIGS. 12 and 13, it was confirmed that the cell performance of the cell including the inorganic ion conductor of Example 40 was improved compared to the cell including the inorganic ion conductor of Comparative Example 2.

### 2) Measurement of cell performance using the inorganic ion conductor of Example 40 according to thickness of the electrolyte

The powder of Example 40 was press-molded under a pressure of 1 X 10³ kg/cm² using a press and CIP to obtain a pellet (diameter: about 12 mm, thickness: about 1.0 mm), thereby preparing an electrolyte. Here, 4 samples of the pellet were prepared with a diameter of about 12 mm and thicknesses of about 0.4 mm, 0.5 mm, 0.75 mm, and 1.0 mm, respectively.

Each pellet was used as an electrolyte membrane, and Pt/C-coated carbon papers (electrodes available from ElectroChem, 2 mgPt/cm²) were attached to opposite sides of each electrolyte membrane to manufacture a cell.

The cell was placed between two Pt-mesh current collectors to form a Pt-mesh/cell/Pt-mesh stack.

While the stack was placed between upper and lower alumina tubes, the structure was gas-sealed by coating and drying an inorganic sealant on the structure.

In order to test the performance of the fuel cell, non-humidified H₂ and non-humidified air were supplied to an anode and a cathode, respectively, at about 50 ccm and about 100 ccm, respectively. Also, a cell potential and an output density of the cell according to a current density were evaluated at 225°C.

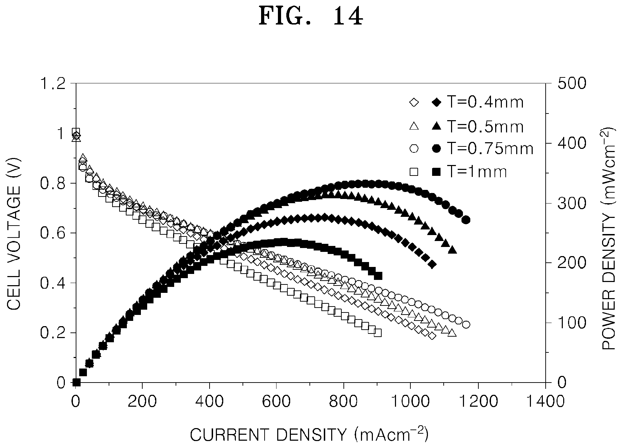

The results of the evaluation are shown in FIG. 14.

Referring to FIG. 14, it was confirmed that the cell potential and the output density were excellent regardless of a thickness of the electrolyte in the cell. Also, it was confirmed that the output density and the cell potential were most improved when the thickness of the electrolyte was about 0.4 mm.

### Evaluation Example 4: Temperature programmed desorption (TPD) test

A TPD test is a method of analyzing components of a desorbed gas while increasing a temperature of a sample at a constant speed.

The inorganic ion conductors of Examples 8 and 33 were dried, and a weight change and a peak intensity of the inorganic ion conductors were observed while increasing a temperature at a rate of 5 °C/min. The results are as shown in FIG.15B.

Referring to FIG. 15B, it was observed that water desorbed from the inorganic ion conductors as temperature of the inorganic ion conductors of Examples 8 and 33 was increased. Here, the desorbed water was obtained from the protons which flowed into the inorganic ion conductors.

Referring to FIG. 15B, a peak intensity of the inorganic ion conductor of Example 33 appeared larger than that of the inorganic ion conductor of Example 8, and thus it was confirmed that a concentration of inflow protons of the inorganic ion conductor of Example 33 was greater than that of the inorganic ion conductor of Example 8.

### Evaluation Example 5: Electrochemical evaluation of cell

An evaluation of an H₂ concentration cell was performed by supplying a gas with a different H₂ concentration to both electrode chambers using Pt/C electrodes attached on opposite sides of the pellet, which was prepared using each of the inorganic ion conductors of Examples 24, 32, and 33. An electromotive force was measured at each temperature range of the cell.

The H₂ concentration cell was manufactured according to the following processes.

The powder of the inorganic ion conductors of Examples 24, 32, and 33 were further ground with a mortar and then press-molded under a pressure of about 1 X 10³ kg/cm² to obtain an press-molded product as a pellet having a diameter of about 12 mm.

The thickness of the pellet was about 0.5 mm.

The pellet was used as an electrolyte membrane, and Pt/C-coated carbon papers were attached to opposite sides of the electrolyte membrane to manufacture a cell.

The cell was placed between two Pt-mesh current collectors to form a Pt-mesh/cell/Pt-mesh stack.

While the stack was placed between upper and lower alumina tubes, the structure was gas-sealed by coating and drying an inorganic sealant on the structure.

In order to test the performance of the cell, a gas with a different concentration of H₂ was supplied to an anode and a cathode of a battery of Electrochemical Cell 1.

Electrochemical Cell 1 100 vol% H₂, Pt/C // electrolyte // Pt/C, 10 vol% H₂+Ar

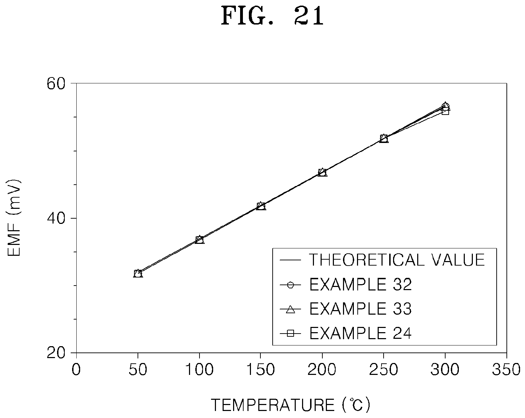

The result of the cell evaluation is as shown in FIG. 21. Theoretical values shown in FIG. 21 indicate electromotive forces calculated from the Nernst equation.

Referring to FIG. 21, the H₂ concentration cells using the inorganic ion conductors of Examples 24, 32, and 33 as an electrolyte each have electromotive forces that are the same as the theoretical values, and thus it was confirmed that the inorganic ion conductors are essentially pure proton conductors.

### Evaluation Example 6: 1 H-Mass Nuclear Magnetic Resonance (Mass NMR) analysis

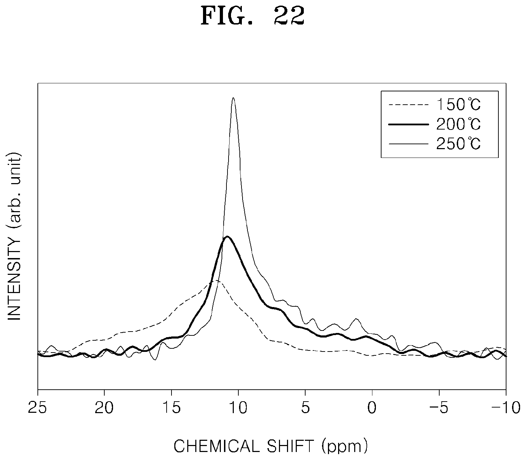

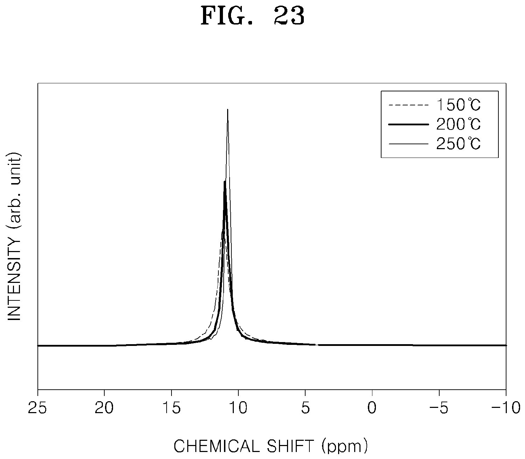

The inorganic ion conductors of Examples 8 and 33 were evaluated by using a ¹H-mass NMR, and the results thereof are as shown in FIGS. 22 and 23, respectively.

Proton mobility may be measured by measuring a peak width at half height of a primary peak through a ¹H-NMR analysis. That is, if the peak width at half height is small, the proton mobility is large, and thus the conductivity is excellent.

FIG. 22 is the result a ¹H- Mass NMR analysis of the inorganic ion conductor of Example 8, and FIG. 23 is the result of a ¹H- Mass NMR analysis of the inorganic ion conductor of Example 33. By comparing FIGS. 16 and 17, it was confirmed that the inorganic ion conductor of Example 33 has a better conductivity than that of Example 8 since peak width at half height of the inorganic ion conductor of Example 33 is smaller than that of Example 8.

As described above, according to an embodiment, an inorganic ion conductor with improved conductivity at a moderate temperature range is provided. A fuel cell with improved efficiency may be manufactured using the inorganic ion conductor.

It should be understood that the exemplary embodiment described herein shall be considered in a descriptive sense only and not for purposes of limitation. Descriptions of features, advantages or aspects within each embodiment shall be considered as available for other similar features, advantages, or aspects in other embodiments.

## Claims

1. An inorganic ion conductor comprising:
a trivalent metallic element;
a pentavalent metallic element;
phosphorus; and
oxygen;
wherein the inorganic ion conductor is represented by:
_{A}^{III}_{0.5-x}B^{V}_{0.5}P₂O₇ or A^{III}_{0.5}B^{V}_{0.5-y}P₂O₇,
and wherein x is 0.05 to 0.45 and y is 0.05 to 0.45,
and wherein A and B denote the trivalent metallic element and the pentavalent metallic element, respectively.

2. The inorganic ion conductor of claim 1, wherein the inorganic ion conductor has a cubic or pseudo-cubic crystal structure.

3. The inorganic ion conductor of claim 1 or 2, wherein the trivalent metallic element is at least one selected from aluminum (Al), iron (Fe), gallium (Ga), yttrium (Y), indium (In), antimony (Sb), bismuth (Bi), lanthanum (La), neodymium (Nd), and samarium (Sm).

4. The inorganic ion conductor of any of claims 1-3, wherein the pentavalent metallic element is at least one selected from antimony (Sb), niobium (Nb), bismuth (Bi), vanadium (V), and tantalum (Ta).

5. The inorganic ion conductor of claim 1, wherein the inorganic ion conductor is at least one selected from In_{0.45}Sb_{0.5}P₂O₇, In_{0.40}Sb_{0.5}P₂O₇, In_{0.35}Sb_{0.5}P₂O₇, In_{0.3}Sb_{0.5}P₂O₇, In_{0.5}Sb_{0.45}P₂O₇, In_{0.5}Sb_{0.4}P₂O₇, In_{0.5}Sb_{0.35}P₂O₇, In_{0.5}Sb_{0.3}P₂O₇, Fe_{0.45}Sb_{0.5}P₂O₇, Fe_{0.40}Sb_{0.5}P₂O₇, Fe_{0.35}Sb_{0.5}P₂O₇, Fe_{0.30}Sb_{0.5}P₂O₇, Fe_{0.5}Sb_{0.45}P₂O₇, Fe_{0.5}Sb_{0.40}P₂O₇, Fe_{0.5}Sb_{0.35}P₂O₇, Fe_{0.5}Sb_{0.3}P₂O₇, Fe_{0.45}Ta_{0.5}P₂O₇, Fe_{0.40}Ta_{0.5}P₂O₇, Fe_{0.35}Ta_{0.5}P₂O₇, Fe_{0.30}Ta_{0.5}P₂O₇, Fe_{0.5}Ta_{0.45}P₂O₇, Fe_{0.5}Ta_{0.4}P₂O₇, Fe_{0.5}Ta_{0.5}P₂O₇, and Fe_{0.5}Ta_{0.3}P₂O₇.

6. The inorganic ion conductor of any of claims 1-5, wherein the inorganic ion conductor is isostructural with a compound of the formula MP₂O₇, wherein M is a tetravalent metal such as SnP₂O₇.

7. An electrolyte membrane comprising the inorganic ion conductor of any of claims 1-6

8. A method of forming an inorganic ion conductor according to any of claims 1-6, the method comprising:
contacting a trivalent metal precursor, a pentavalent metal precursor, and a phosphorous precursor to obtain a mixture; and
thermally treating the mixture to form the inorganic ion conductor, wherein the inorganic ion conductor comprises a trivalent metallic element of the trivalent metal precursor, a pentavalent metallic element of the pentavalent metal precursor, phosphorus (P); and oxygen (O)
wherein said thermally treating step comprises thermally treating the mixture to obtain an inorganic ion conductor represented by:
A^{III}_{0.5-x}B^{V}_{0.5}P₂O₇ or A^{III}_{0.5}B^{V}_{0.5-y}P₂O₇,
and wherein x is 0.05 to 0.45 and y is 0.05 to 0.45
and wherein A and B denote the trivalent metallic element and the pentavalent metallic element, respectively.

9. The method of claim 8, wherein the phosphorous precursor comprises at least one selected from phosphoric acid and phosphonic acid.

10. An electrode for a fuel cell comprising the inorganic ion conductor of any of claims 1-6.

11. A fuel cell comprising the inorganic ion conductor of any of claims 1-6.

12. An electrochemical device comprising the inorganic ion conductor of any of claims 1-6.

13. An electrode for a fuel cell comprising an inorganic ion conductor, wherein the inorganic ion conductor is at least one selected from Fe_{0.5}Nb_{0.5}P₂O₇, In_{0.5}Sb_{0.5}P₂O₇, and Fe_{0.5}Ta_{0.5}P₂O₇.

## Patentansprüche

1. Anorganischer Ionenleiter, umfassend:
ein dreiwertiges metallisches Element;
ein fünfwertiges metallisches Element;
Phosphor; und
Sauerstoff;
wobei der anorganische Ionenleiter dargestellt wird durch:
A^{III}_{0,5-x}B^{V}₀,₅P₂O₇ oder A^{III}_{0,5}B^{V}_{0,5-y}P₂O₇,
und wobei x 0,05 bis 0,45 ist und y 0,05 bis 0,45 ist,
und wobei A und B jeweils das dreiwertige metallische Element und das fünfwertige metallische Element kennzeichnen.

2. Anorganischer Ionenleiter nach Anspruch 1, wobei der anorganische Ionenleiter eine kubische oder pseudokubische Kristallstruktur hat.

3. Anorganischer Ionenleiter nach Anspruch 1 oder 2, wobei das dreiwertige metallische Element wenigstens eines ausgewählt aus Aluminium (Al), Eisen (Fe), Gallium (Ga), Yttrium (Y), Indium (In), Antimon (Sb), Bismut (Bi), Lanthan (La), Neodym (Nd) und Samarium (Sm) ist.

4. Anorganischer Ionenleiter nach einem der Ansprüche 1-3, wobei das fünfwertige metallische Element wenigstens eines ausgewählt aus Antimon (Sb), Niobium (Nb), Bismut (Bi), Vanadium (V) und Tantal (Ta) ist.

5. Anorganischer Ionenleiter nach Anspruch 1, wobei der anorganische Ionenleiter wenigstens einer ausgewählt aus In_{0,45}Sb_{0,5}P₂O₇, In_{0,40}Sb_{0,5}P₂O₇, In_{0,35}Sb_{0,5}P₂O₇, In_{0,3}Sb_{0,5}P₂O₇, In_{0,5}Sb_{0,45}P₂O₇, In_{0,5}Sb_{0,4}P₂O₇, In₀,₅Sb_{0,35}P₂O₇, In₀,₅Sb_{0,3}P₂O₇, Fe_{0,45}Sb₀,₅P₂O₇, Fe_{0,40}Sb_{0,5}P₂O₇, Fe_{0,35}Sb_{0,5}P₂O₇, Fe_{0,30}Sb_{0,5}P₂O₇, Fe_{0,5}Sb_{0,45}P₂O₇, Fe_{0,5}Sb_{0,40}P₂O₇, Fe_{0,5}Sb_{0,35}P₂O₇, Fe_{0,5}Sb_{0,3}P₂O₇, Fe_{0,45}Ta_{0,5}P₂O₇, Fe_{0,40}Ta_{0,5}P₂O₇, Fe_{0,35}Ta_{0,5}P₂O₇, Fe_{0,30}Ta_{0,5}P₂O₇, Fe_{0,5}Ta_{0,45}P₂O₇, Fe_{0,5}Ta_{0,4}P₂O₇, Fe_{0,5}Ta_{0,35}P₂O₇ und Fe_{0,5}Ta_{0,3}P₂O₇ ist.

6. Anorganischer Ionenleiter nach einem der Ansprüche 1-5, wobei der anorganische Ionenleiter isostrukturell zu einer Verbindung der Formel MP₂O₇ ist, wobei M ein vierwertiges Metall ist, zum Beispiel SnP₂O₇.

7. Elektrolytmembran, umfassend den anorganischen Ionenleiter nach einem der Ansprüche 1-6.

8. Verfahren zum Bilden eines anorganischen Ionenleiters nach einem der Ansprüche 1-6, wobei das Verfahren Folgendes umfasst:
Inkontaktbringen eines dreiwertigen Metallvorläufers, eines fünfwertigen Metallvorläufers und eines Phosphorvorläufers, um ein Gemisch zu erlangen; und
Wärmebehandlung des Gemischs, um den anorganischen Ionenleiter zu bilden, wobei der anorganische Ionenleiter ein dreiwertiges metallisches Element des dreiwertigen Metallvorläufers, ein fünfwertiges metallisches Element des fünfwertigen Metallvorläufers, Phosphor (P); und Sauerstoff (O) umfasst,
wobei der Wärmebehandlungsschritt eine Wärmebehandlung des Gemischs umfasst, um einen anorganischen Ionenleiter zu bilden, dargestellt durch:
A^{III}_{0.5-x}B^{V}_{0,5}P₂O₇ oder A^{III}_{0.5}B^{V}_{0,5-y}P₂O₇,
und wobei x 0,05 bis 0,45 ist und y 0,05 bis 0,45 ist,
und wobei A und B jeweils das dreiwertige metallische Element und das fünfwertige metallische Element kennzeichnen.

9. Verfahren nach Anspruch 8, wobei der Phosphorvorläufer mindestens eine ausgewählt aus Phosphorsäure und Phosphonsäure umfasst.

10. Elektrode für eine Brennstoffzelle, umfassend den anorganischen Ionenleiter nach einem der Ansprüche 1-6.

11. Brennstoffzelle, umfassend den anorganischen Ionenleiter nach einem der Ansprüche 1-6.

12. Elektrochemische Vorrichtung, umfassend den anorganischen Ionenleiter nach einem der Ansprüche 1-6.

13. Elektrode für eine Brennstoffzelle, umfassend einen anorganischen Ionenleiter, wobei der anorganische Ionenleiter wenigstens einer ausgewählt aus Fe_{0,5}Nb_{0,5}P₂O₇, In_{0,5}Sb_{0,5}P₂O₇ und Fe_{0,5}Ta_{0,5}P₂O₇ ist.

## Revendications

1. Conducteur ionique inorganique comprenant :
un élément métallique trivalent ;
un élément métallique pentavalent ;
du phosphore ; et
de l'oxygène ;
le conducteur ionique inorganique étant représenté par :
A^{III}_{0,5-x}B^{V}₀,₅P₂O₇ ou A^{III}_{0.5}B^{V}_{0,5-y}P₂O_{7,}
et x étant entre 0,05 et 0,45 et y étant entre 0,05 et 0,45,
et A et B désignant l'élément métallique trivalent et l'élément métallique pentavalent, respectivement.

2. Conducteur ionique inorganique selon la revendication 1, le conducteur ionique inorganique ayant une structure cristalline cubique ou pseudo-cubique.

3. Conducteur ionique inorganique selon la revendication 1 ou 2, l'élément métallique trivalent étant au moins un élément sélectionné parmi l'aluminium (Al), le fer (Fe), le gallium (GA), l'yttrium (Y), l'indium (In), l'antimoine (Sb), le bismuth (Bi), le lanthane (La), le néodyme (Nd) et le samarium (SM).

4. Conducteur ionique inorganique selon l'une quelconque des revendications 1 à 3, l'élément métallique pentavalent étant au moins un élément sélectionné parmi l'antimoine (Sb), le niobium (Nb), le bismuth (Bi), le vanadium (V) et le tantale (Ta).

5. Conducteur ionique inorganique selon la revendication 1, le conducteur ionique inorganique étant au moins un élément sélectionné parmi In_{0,45}Sb_{0,5}P₂O₇, In_{0,40}Sb_{0,5}P₂O₇, In_{0,35}Sb_{0,5}P₂O₇, In_{0,3}Sb_{0,5}P₂O₇, In_{0,5}Sb_{0,45}P₂O₇, In_{0,5}Sb_{0,4}P₂O₇, In_{0,5}Sb_{0,35}P₂O₇, In_{0,5}Sb_{0,3}P₂O₇, Fe_{0,45}Sb_{0,5}P₂O₇, Fe_{0,40}Sb_{0,5}P₂O₇, Fe_{0,35}Sb_{0,5}P₂O_{7,} Fe_{0,30}Sb_{0,5}P₂O_{7,} Fe_{0,5}Sb_{0,45}P₂O_{7,} Fe_{0,5}Sb_{0,40}P₂O_{7,} Fe_{0,5}Sb_{0,35}P₂O_{7,} Fe_{0,5}Sb_{0,3}P₂O_{7,} Fe_{0,45}Ta_{0,5}P₂O_{7,} Fe_{0,40}Ta_{0,5}P₂O_{7,} Fe_{0,35}Ta_{0,5}P₂O_{7,} Fe_{0,30}Ta_{0,5}P₂O_{7,} Fe_{0,5}Ta_{0,45}P₂O_{7,} Fe_{0,5}Ta_{0,4}P₂O_{7,} Fe_{0,5}Ta_{0,35}P₂O_{7,} et Fe_{0,5}Ta_{0,3}P₂O₇.

6. Conducteur ionique inorganique selon l'une quelconque des revendications 1 à 5, le conducteur ionique inorganique étant isostructurel avec un composé de la formule MP₂O₇, où M est un métal tétravalent tel que SnP₂O₇.

7. Membrane électrolyte comprenant le conducteur ionique inorganique selon l'une quelconque des revendications 1 à 6.

8. Procédé de formation d'un conducteur ionique inorganique selon l'une quelconque des revendications 1 à 6, le procédé comprenant les étapes consistant à :
mettre en contact un précurseur métallique trivalent, un précurseur métallique pentavalent, et un précurseur de phosphore pour obtenir un mélange ; et
traiter thermiquement le mélange pour former le conducteur ionique inorganique, le conducteur ionique inorganique comprenant un élément métallique trivalent du précurseur métallique trivalent, un élément métallique pentavalent du précurseur métallique pentavalent, du phosphore (P) et de l'oxygène (O) ;
ledit traitement thermique comprenant l'étape consistant à traiter thermiquement le mélange pour obtenir un conducteur ionique inorganique représenté par :
A^{III}_{0,5-x}B^{V}_{0,5}P₂O₇ ou A^{III}_{0,5}B^{V}_{0,5-y}P₂O₇,
et x étant entre 0,05 et 0,45 et y étant entre 0,05 et 0,45,
et A et B désignant l'élément métallique trivalent et l'élément métallique pentavalent, respectivement.

9. Procédé selon la revendication 8, le précurseur de phosphore comprenant de l'acide phosphorique et/ou de l'acide phosphonique.

10. Électrode pour pile à combustible comprenant le conducteur ionique inorganique selon l'une quelconque des revendications 1 à 6.

11. Pile à combustible comprenant le conducteur ionique inorganique selon l'une quelconque des revendications 1 à 6.

12. Dispositif électrochimique comprenant le conducteur ionique inorganique selon l'une quelconque des revendications 1 à 6.

13. Électrode pour pile à combustible comprenant un conducteur ionique inorganique, le conducteur ionique inorganique étant au moins un élément sélectionné parmi Fe_{0,5}Nb_{0,5}P₂O₇, In_{0,5}Sb_{0,5}P₂O₇, et Fe_{0,5}Ta_{0,5}P₂O₇.
